# EUROPEAN PATENT SPECIFICATION

(11) **EP 3 674 049 B1**
(45) Date of publication and mention of the grant of the patent: **09.08.2023**
(21) Application number: 18847534.7
(22) Date of filing: 19.06.2018
(51) Int. Cl.: B29C 33/02, B29C 33/38, B29L 30/00, B29D 30/06, B23P 15/24

(54) **METHOD FOR PRODUCING A TIRE VULCANIZATION MOULD**
VERFAHREN ZUR HERSTELLUNG EINER REIFENVULKANISIERUNGSFORM
PROCÉDÉ DE FABRICATION D'UN MOULE POUR LA VULCANISATION DE PNEUMATIQUES

(30) Priority: 22.08.2017 JP 2017159595
(43) Date of publication of application: 01.07.2020
(73) Proprietor: Bridgestone Corporation, Tokyo 104-8340 (JP)
(72) Inventor: ISHIHARA, Yasuyuki, Tokyo 104-8340 (JP)
(74) Representative: Marks & Clerk LLP
(86) International application number: PCT/JP2018/023338
(87) International publication number: WO 2019/039061

(56) References cited:
- EP-A1- 1 588 820
- JP-A- 2005 161 575
- JP-A- 2005 231 259
- JP-A- 2006 315 065
- JP-A- 2010 201 632
- JP-A- 2015 083 389
- JP-A- 2015 083 389
- US-A1- 2007 166 419

## Description

### Technical Field

The present disclosure relates to a manufacturing method for a tire vulcanization mold and to a tire vulcanization mold in which mold pieces are installed at inner faces of plural holders to form plural mold segments.

### Background Art

For example, Japanese Patent Application Laid-Open (JP-A) No. H05-220753 discloses a known tire vulcanization mold manufacturing method. Attention is also drawn to the disclosures of US2007/166419 and JP2015/083389.

In this manufacturing method, a single mold material block having a circular cylindrical shape and formed with molding protrusions on an inner face in a complementary relationship with wide tire grooves is divided by being sectioned in a radial direction using a wire-cut electrical discharge machine, thereby forming multiple segment pieces, each formed with part of the molding protrusion at an inner face thereof. The plural segment pieces are then assembled to and retained at inner faces of plural steel holders in a predetermined sequence to form plural mold segments formed from the holders and segment pieces, and minute gas discharge gaps are formed between the segment pieces so as to allow gas such as air to pass through without allowing rubber to pass through. The occurrence of spewing (thin rubber columns) at vent holes is thus prevented.

### SUMMARY OF INVENTION

### Technical Problem

However, in such a conventional tire vulcanization mold manufacturing method, in cases in which the surface roughness of side faces (sectioned faces) of the segment pieces is honed to an appropriate value, or in cases in which the side faces are formed with additional gas discharge grooves in order to guide gas, repeated tasks are required to grip the segment pieces in a jig one piece at a time, process the segment pieces using a machining tool such as an end mill, and then remove the segment pieces from the jig. This results in issues such as burdensome manufacturing tasks and poorer work efficiency. Moreover, since the segment pieces are processed individually, issues also arise due to pattern misalignment and inconsistent gap sizes after becoming mold segments.

An object of the present disclosure is to provide a tire vulcanization mold manufacturing method and a tire vulcanization mold enabling simpler manufacturing tasks and easy improvements to work efficiency, while also enabling formation of mold pieces with high precision.

### Solution to Problem

This object can be achieved by a tire vulcanization mold manufacturing method including: a process of preparing plural mold material blocks, an inner face of an axial direction central portion of each of the mold material blocks being formed with a molding protrusion in a complementary relationship with a wide groove of a tire, and each of the mold material blocks having a same circular cylindrical shape; a process of forming, by machining, a plurality of penetrating slits through the axial direction central portion of each of the mold material blocks, such that the penetrating slits each extend along the axial direction and are separated from each other in a circumferential direction, and forming mold pieces between adjacent penetrating slits with a portion of the molding protrusion formed on an inner face of the mold pieces; a process of cutting out the mold pieces from remainder rings that extend continuously in the circumferential direction at one axial direction end and the other axial direction end of the mold pieces; and a process of repeatedly performing a task to extract the mold pieces from the plurality of mold material blocks one at a time in sequence and to install the mold pieces at inner faces of plural holders so as to form plural mold segments each configured by a holder and a mold piece.

### Advantageous Effects of Invention

In the present disclosure, after forming the plural penetrating slits in the plural mold material blocks with the same circular cylindrical shape such that the mold pieces are formed between the adjacent penetrating slits, the mold pieces are cut out from the remainder rings positioned at the one axial direction side and the other axial direction side of the penetrating slits. The mold pieces are then retrieved from the plural mold material blocks one at a time in sequence and installed at the inner faces of the plural holders to form the plural mold segments. Thus, when the surface roughness of side faces of the mold pieces is honed or gas discharge grooves to guide gas are formed at the side faces, all of the mold pieces are continuous to the remainder rings at the one axial direction end and the other axial direction end thereof. Namely, due to being firmly retained by the remainder rings, tasks can be performed while still in this state. As a result, there is no need to retain the mold pieces in a jig one at a time in order to perform work thereon, thereby enabling the manufacturing tasks to be simplified and the work efficiency to be easily improved. Moreover, since the mold pieces are continuous to and firmly retained by the remainder rings extending along the circumferential direction at the one axial direction ends and the other axial direction ends of the mold pieces when the penetrating slits are formed by machining to form the mold pieces, the mold pieces can be formed with high precision, and pattern misalignment and inconsistent gap sizes can easily be suppressed.

### BRIEF DESCRIPTION OF DRAWINGS

Fig. 1A is a perspective view illustrating a mold material block of a first exemplary embodiment of the present invention.
Fig. 1B is a perspective view illustrating a mold material block of the first exemplary embodiment of the present invention.
Fig. 2A is a perspective view illustrating a state in which penetrating slits have been formed in a mold material block.
Fig. 2B is a perspective view illustrating a state in which penetrating slits have been formed in a mold material block.
Fig. 3 is a partial cross-section illustrating a mold material block formed with deep grooves, as sectioned along a circumferential direction.
Fig. 4 is a perspective view illustrating a single mold piece.
Fig. 5A is a perspective view illustrating a state in which outer faces of both axial direction end portions of a mold material block have been machined.
Fig. 5B is a perspective view illustrating a state in which outer faces of both axial direction end portions of a mold material block have been machined.
Fig. 6A is a perspective view illustrating plural mold pieces that have been cut out.
Fig. 6B is a perspective view illustrating plural mold pieces that have been cut out.
Fig. 7 is a perspective view illustrating a state in which mold pieces have been fitted to holders.
Fig. 8A is a perspective view illustrating a second exemplary embodiment of the present invention in a state in which rough slits have been formed to a mold material block.
Fig. 8B is a perspective view illustrating the second exemplary embodiment of the present invention in a state in which rough slits have been formed to a mold material block.
Fig. 9A is a perspective view illustrating a state in which an external force has been applied to the mold material block in Fig. 8A.
Fig. 9B is a perspective view illustrating a state in which an external force has been applied to the mold material block in Fig. 8B.
Fig. 10A is a perspective view illustrating a state in which penetrating slits have been formed in the mold material block in Fig. 8A.
Fig. 10B is a perspective view illustrating a state in which penetrating slits have been formed in the mold material block in Fig. 8B.
Fig. 11A is a perspective view illustrating a state in which machining has been performed on outer faces of both axial direction end portions of the mold material block in Fig. 10A.
Fig. 11B is a perspective view illustrating a state in which machining has been performed on outer faces of both axial direction end portions of the mold material block in Fig. 10B.
Fig. 12A is a perspective view illustrating a third exemplary embodiment of the present invention in a state in which penetrating slits have been formed in a mold material block.
Fig. 12B is a perspective view illustrating the third exemplary embodiment of the present invention in a state in which penetrating slits have been formed in a mold material block.
Fig. 13A is a perspective view illustrating a state in which sub slits have been formed in a mold piece.
Fig. 13B is a perspective view illustrating a state in which sub slits have been formed in a mold piece.
Fig. 14 is a perspective view illustrating a state in which sub pieces have been assembled into a mold piece.
Fig. 15 is a perspective view illustrating a mold material block of a fourth exemplary embodiment of the present invention.
Fig. 16 is a perspective view illustrating the vicinity of a fine groove formation body of a fifth exemplary embodiment of the present invention.

### DESCRIPTION OF EMBODIMENTS

Explanation follows regarding a first exemplary embodiment of the present invention, with reference to the drawings.

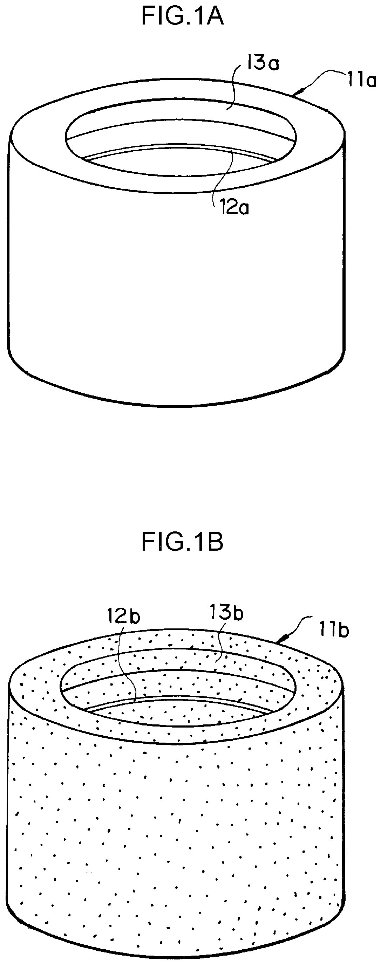

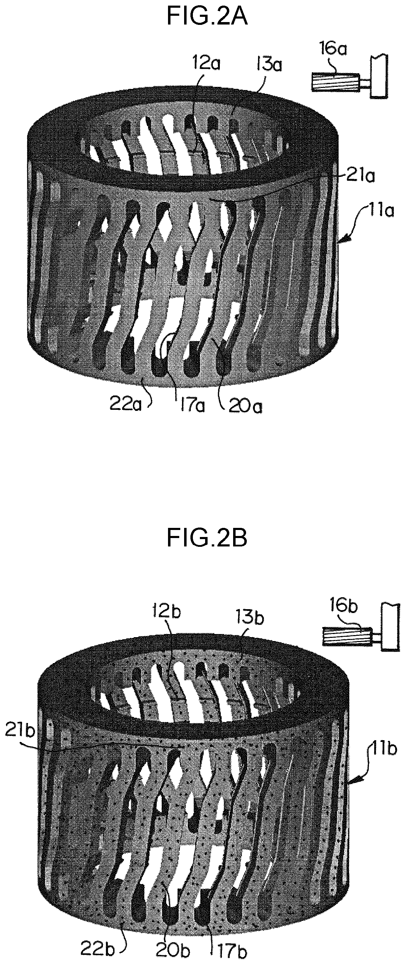

Fig. 1A and Fig. 1B illustrate circular cylindrical shaped mold material blocks 11a, 11b cast from an aluminum alloy or the like. Plural of the mold material blocks 11a, 11b (two in the present exemplary embodiment) with a same shape as each other are prepared. Molding protrusions 12a, 12b in a complementary relationship with wide grooves (main grooves, lateral grooves, and so on that do not close up when in contact with the ground) formed in a tire during vulcanization, are formed at an inner face of an axial direction central portion of each of the mold material blocks 11a, 11b. Examples of the molding protrusions 12a, 12b include main ribs extending in a circumferential direction and lateral ribs extending in the axial direction. The two axial direction end portions of the respective mold material blocks 11a, 11b are formed with inward flanges 13a, 13b that project toward a radial direction inside. Fig. 2A and Fig. 2B illustrate end mills 16a, 16b, serving as machining tools fitted to a milling machine. The end mills 16a, 16b are used to machine the axial direction central portions of the mold material blocks 11a, 11b at different positions around the circumferential direction when the mold material blocks 11a, 11b have been set on a non-illustrated worktable, so as to form different types of penetrating slits 17a, 17b at the axial direction central portions of the respective mold material blocks 11a, 11b, the penetrating slits 17a, 17b extending along the axial direction and penetrating the mold material blocks 11a, 11b in the radial direction. Note that although the penetrating slits 17a, 17b extend along the axial direction while curving gently in a staircase pattern, the penetrating slits 17a, 17b of the present disclosure may extend in straight lines along the axial direction.

Similar machining is performed repeatedly while rotating the worktable and the mold material blocks 11a, 11b about their axes by a predetermined angle, for example 12°, at a time, thereby forming plural (30) of each of the identically-shaped penetrating slits 17a, 17b. The penetrating slits 17a, 17b run parallel to each other, are separated by an equal angle (12°) in the circumferential direction, and extend along the axial direction at the axial direction central portions of the respective mold material blocks 11a, 11b. In this manner, the plural penetrating slits 17a, 17b are formed separated from each other in the circumferential direction in the axial direction central portions of the mold material blocks 11a, 11b, and mold pieces 20a, 20b of different types are formed between adjacent penetrating slits 17a and adjacent penetrating slits 17b, with inner faces of the mold pieces 20a, 20b formed with parts of the respective molding protrusions 12a, 12b. Pairs of remainder rings 21a, 22a and remainder rings 21b, 22b extending continuously around the circumferential direction are formed at one axial direction side and the other axial direction side of one axial direction ends and the other axial direction ends of the respective penetrating slits 17a, 17b so as to be continuous to one axial direction ends and the other axial direction ends of the mold pieces 20a, 20b. The mold pieces 20a are capable of being inserted into the penetrating slits 17b in a face-to-face contact state with the mold pieces 20b (the mold pieces 20a and the penetrating slits 17b have the same width as each other). The mold pieces 20b are capable of being inserted into the penetrating slits 17a in a face-to-face contact state with the mold pieces 20a (the mold pieces 20b and the penetrating slits 17a have the same width as each other).

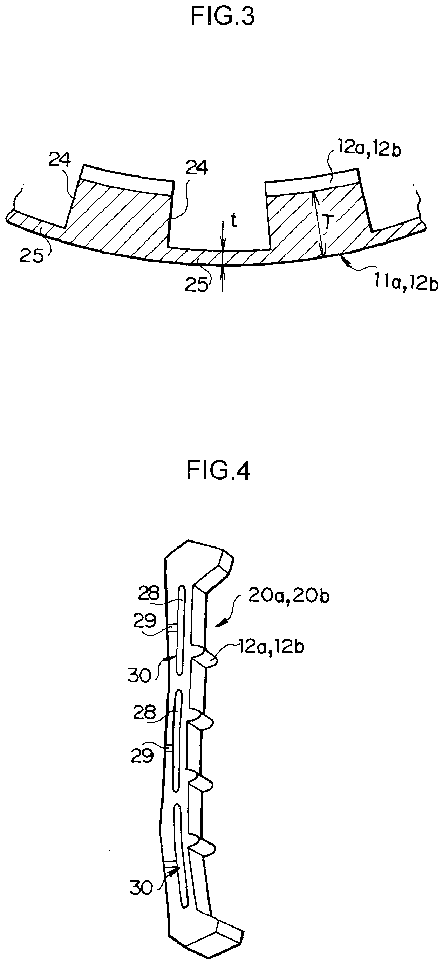

Note that although machining is performed using the end mills 16a, 16b while repeatedly rotating the worktable and the mold material blocks 11a, 11b about their axes by an equal angle each time in the present exemplary embodiment, in the present disclosure, the worktable and the mold material blocks 11a, 11b may be stationary, and the end mills 16a, 16b repeatedly turned about the axes to perform machining. Moreover, although the penetrating slits 17a, 17b are formed to the respective mold material blocks 11a, 11b by moving the end mills 16a, 16b from a radial direction inside toward a radial direction outside in the present exemplary embodiment, in the present disclosure the penetrating slits 17a, 17b may be formed by moving the end mills 16a, 16b from the radial direction outside toward the radial direction inside. Note that the task to form the penetrating slits 17a, 17b by machining may be performed by machining the penetrating slits 17a, 17b all at once with the end mills 16a, 16b. As illustrated in Fig. 3, the end mills 16a, 16b are preferably used to cut out deep grooves 24 in the mold material blocks 11a, 11b that differ from the penetrating slits 17a, 17b in depth but are formed at the same circumferential direction positions and in the same shapes as the penetrating slits 17a, 17b. When the number of the deep grooves 24 formed matches the number of the penetrating slits 17a, 17b, bottom walls 25 remaining in the deep grooves 24 are then successively removed by machining with the end mills 16a, 16b around the entire circumference.

The reason for processing in this manner is that after a penetrating slit 17a or 17b has penetrated through and is thus completed, the narrow mold pieces 20a, 20b might undergo flexing deformation when the next of the penetrating slits 17a, 17b is formed since the mold pieces 20a, 20b have low bending rigidity and are subject to machining resistance during formation of the penetrating slits 17a, 17b. If the machining proceeds with the mold pieces 20a, 20b in such a flexing deformed state, the shapes of the penetrating slits 17a, 17b and the mold pieces 20a, 20b might deviate from their proper shapes. However, by removing the bottom walls 25 of the deep grooves 24 after the deep grooves 24 have been formed around the entire circumferences of the mold material blocks 11a, 11b as described above, flexing deformation of the bottom walls 25 due to machining resistance during forming of the deep grooves 24 is reduced. Moreover, when the thin bottom walls 25 of the deep grooves 24 are removed, the machining resistance has a small value. Furthermore, the machining resistance is distributed across two processes during formation of the penetrating slits 17a, 17b. Flexing deformation during formation of the penetrating slits 17a, 17b can be suppressed as a result, enabling the penetrating slits 17a, 17b (mold pieces 20a, 20b) to be formed with high precision. Note that a radial direction thickness t of the bottom walls 25 is preferably in a range of from 10% to 20% of a radial direction thickness T of the axial direction central portions of the mold material blocks 11a, 11b. This is since such a range enables the bottom walls 25 to be removed easily while sufficiently reducing flexing deformation when processing the deep grooves 24. Removal of the bottom walls 25 as described above may be performed after forming the deep grooves 24 around the entire circumferences of the mold material blocks 11a, 11b, or may be performed each time a deep groove 24 is formed.

Gas discharge grooves 30 are formed prior to a cutting out task, described later, performed during or immediately after formation of the penetrating slits 17a, 17b. As illustrated in Fig. 4, each of the gas discharge grooves 30 is configured on at least one circumferential direction side face of the corresponding mold piece 20a, 20b by at least one guide groove 28 extending along a length direction of the mold piece 20a, 20b, and a collection groove 29 extending in the radial direction from a length direction central portion of the guide groove 28 to an outer face of the mold piece 20a, 20b. Forming such gas discharge grooves 30 to the mold pieces 20a, 20b enables gas such as air entering between adjacently disposed mold pieces 20a, 20b to be effectively discharged to outside the vulcanization mold. Forming such gas discharge grooves 30 when both axial direction ends of the respective mold pieces 20a, 20b are still continuous to the remainder rings 21a, 21b enables deformation of the mold pieces 20a, 20b during the forming task to be effectively suppressed, enabling the dimensional precision of the gas discharge grooves 30 to be easily improved. Moreover, in cases in which the surface roughness of side faces of the mold pieces 20a, 20b deviates from specified values, a honing tool is used to perform honing at the same time as, or before and after, formation of the gas discharge grooves 30. When this is performed, deformation of the mold pieces 20a, 20b can be effectively suppressed for similar reasons to those described above.

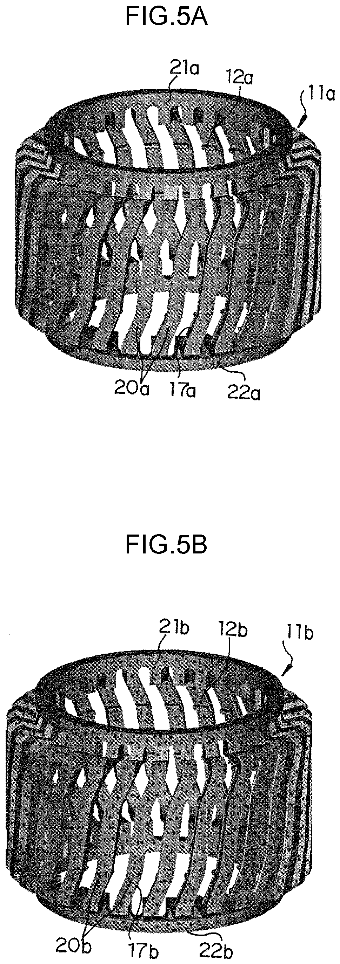

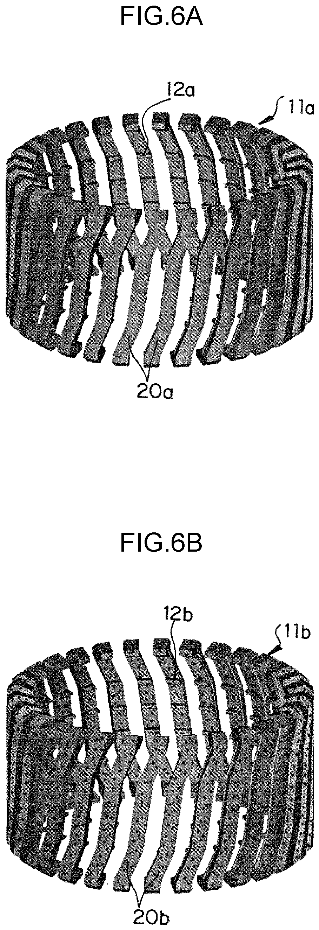

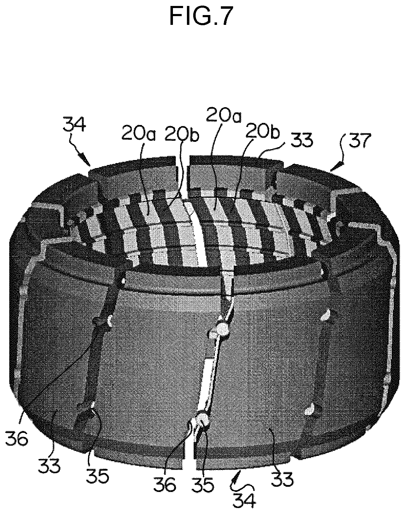

Next, the remainder rings 21a, 22a and the remainder rings 21b, 22b are machined into predetermined shapes using the end mills 16a, 16b and so on as illustrated in Fig. 5A and Fig. 5B. When this is performed, the outer faces of the mold pieces 20a, 20b are machined as required to achieve the proper shape. Note that when performing the machining described above, although the penetrating slits 17a, 17b are formed to the mold material blocks 11a, 11b, the remainder rings 21a, 22a, 21b, 22b still remain at both axial direction end portions of the respective mold material blocks 11a, 11b, such that the mold material blocks 11a, 11b are continuous around the circumferential direction. Jigs to retain the mold pieces 20a, 20b are thus rendered unnecessary, resulting in an easier task. Next, after removing the mold material blocks 11a, 11b from the worktable, the respective mold pieces 20a, 20b are gripped from both circumferential direction sides by a non-illustrated gripping means, after which the end mills 16a, 16b, a turntable, and the like are used to machine boundaries between the mold pieces 20a, 20b and the remainder rings 21a, 21b. As a result, as illustrated in Fig. 6A and Fig. 6B, the mold pieces 20a, 20b are cut out from the remainder rings 21a, 21b that extend continuously around the circumferential direction at the one axial direction ends and the other axial direction ends of the mold pieces 20a, 20b. Next, the mold pieces 20a, 20b obtained from the plural (two) mold material blocks 11a, 11b of which only the mold pieces 20a, 20b remain are retrieved one at a time in sequence, and are attached and installed to an inner face of an arc shaped holder 33 made of steel or the like as illustrated in Fig. 7 in the same sequence as that in which they were retrieved. When a total of six of the mold pieces 20a, 20b have been alternately installed around the circumferential direction to the inner face of the holder 33 by repeating the above task two more times, a mold segment 34 configured by the holder 33 and the mold pieces 20a, 20b is formed.

Note that as illustrated in Fig. 7, plural of the holders 33 (ten in this example) are arranged around the circumferential direction. The task of installing the mold pieces 20a, 20b at the inner faces of the remaining holders 33 is performed repeatedly until the plural mold pieces 20a, 20b are installed alternately at the inner faces of all of the holders 33. Although the mold pieces 20a, 20b both have the same width in the present exemplary embodiment, in the present disclosure the mold pieces 20a and the mold pieces 20b may have different widths from each other. In such cases, the width (circumferential direction length) of the holders 33 should be an integral multiple of the combined widths of the mold pieces 20a and 20b. Plural of the mold segments 34, each formed of a holder 33 and plural of the mold pieces 20a, 20b installed at the inner face of the holder 33, are formed in this manner (so as to form a single sector mold 37 overall). Note that circular column shaped pin protectors 35 are provided to one circumferential direction side face of at least one, and in this example all, of the holders 33, such that approximately half of the pin protectors 35 projects from the one side face. Another circumferential direction side face of the holder 33 opposing the pin protectors 35 is formed with circular arc shaped recessed grooves 36 into which the projecting portions of the corresponding pin protectors 35 fit. Such a configuration enables adjacent mold segments 34 to be positioned with respect to each other with high precision in both the circumferential direction and the axial direction, and also enables the dimension of a gap between the one circumferential direction side face and the other circumferential direction side face to be easily controlled, without needing to carry out a finishing process.

In the present exemplary embodiment, half (30) of the required number (60) of mold pieces 20a, 20b are cut out from each of the two mold material blocks 11a, 11b as described above, after which assembly is performed by alternately retrieving the mold pieces 20a, 20b of different types one at a time in sequence and installing and the mold pieces 20a, 20b to the inner faces of the plural holders 33 to form the single sector mold 37. However, in the present disclosure, configuration may be made such that plural mold pieces are cut out from three or more mold material blocks, after which assembly is performed by retrieving the mold pieces of different types one at a time in sequence and installing the mold pieces to the inner faces of holders to form a single sector mold. The single sector mold 37 manufactured in this manner is mounted in a tire vulcanization device including a static lower mold and an upper mold that can be raised and lowered. When an unvulcanized tire is placed on the lower mold, the upper mold is lowered so as to approach the lower mold, and respective mold segments are synchronously moved toward the radial direction inside to close the vulcanization mold. A vulcanization medium is then supplied into the vulcanization mold at a high temperature and high pressure so as to vulcanize the unvulcanized tire.

In this manner, after forming the plural penetrating slits 17a, 17b in the plural mold material blocks 11a, 11b with the same circular cylindrical shape such that the mold pieces 20a, 20b are formed between the adjacent penetrating slits 17a, 17b, the mold pieces 20a, 20b are cut out from the remainder rings 21a, 21b positioned at the one axial direction side and the other axial direction side of the penetrating slits 17a, 17b. The mold pieces 20a, 20b are then retrieved from the plural mold material blocks 11a, 11b one at a time in sequence and installed at the inner faces of the plural holders 33 to form the plural mold segments 34. When the surface roughness of the side faces of the mold pieces 20a, 20b is honed or the gas discharge grooves 30 to guide gas are formed at the side faces as described above, all of the mold pieces 20a, 20b are still continuous to the remainder rings 21a, 21b at the one axial direction ends and the other axial direction ends thereof. Namely, due to being firmly retained by the remainder rings 21a, 21b, tasks can be performed while still in this state. As a result, there is no need to retain the mold pieces 20a, 20b in a jig one at a time in order to perform work thereon, thereby enabling the manufacturing tasks to be simplified and the work efficiency to be easily improved. Moreover, since the mold pieces 20a, 20b are similarly firmly retained by the remainder rings 21a, 21b, the mold pieces 20a, 20b can be formed with high precision, and pattern misalignment and inconsistent gap sizes can easily be suppressed.

The use of tires having tread patterns with a low degree of repetition around the circumferential direction, and tires formed with wide curving grooves inclining at a large angle with respect to the tire circumferential direction or the tire axial direction is spreading in recent years. In such tires too, manufacturing with the vulcanization mold applied with the manufacturing method of the present exemplary embodiment enables pattern misalignment and inconsistent gap sizes between adjacent mold pieces 20a, 20b to be effectively suppressed. Moreover, when forming the mold pieces 20a, 20b, since the remainder rings 21a, 22a and the remainder rings 21b, 22b are continuous at the one axial direction ends and the other axial direction ends of the mold pieces 20a and the mold pieces 20b, even if the shapes of the penetrating slits 17a, 17b (mold pieces 20a, 20b) are modified, this can be easily accommodated simply by modifying data used to control the movement paths of the end mills 16a, 16b.

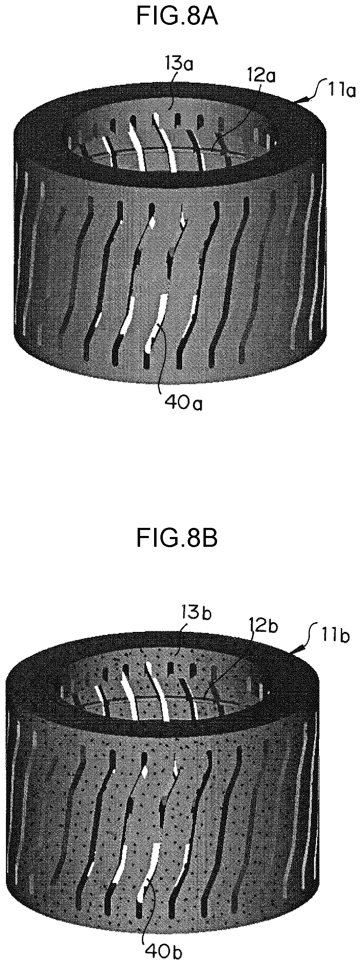

Fig. 8A to Fig. 11B illustrate a second exemplary embodiment of the present disclosure. In cases in which the mold material blocks 11a, 11b are manufactured by casting as described above, dimensional error often occurs causing deviation from the proper shape. One conceivable strategy to address this would be to insert an enlargement means inside both of the inward flanges 13a, 13b of the mold material blocks 11a, 11b when in a cast state to enlarge both of the inward flanges 13a, 13b, and to form the penetrating slits as described above in this state. However, were the two inward flanges 13a, 13b to be pushed apart when in the cast state, only the vicinity of the two inward flanges 13a, 13b would be enlarged, whereas the axial direction central portions of the mold material blocks 11a, 11b where enlargement is desired have high rigidity and so would hardly undergo any enlargement. The dimensions could not be corrected as a result. Accordingly, as illustrated in Fig. 8A and Fig. 8B, in the present exemplary embodiment, rough slits 40a, 40b with narrower widths than the proper dimensions of the penetrating slits are formed at the positions of the penetrating slits using a machining tool, such as a non-illustrated end mill, and a finishing allowance to be removed when forming the penetrating slits is left on either side of each of the rough slits 40a, 40b.

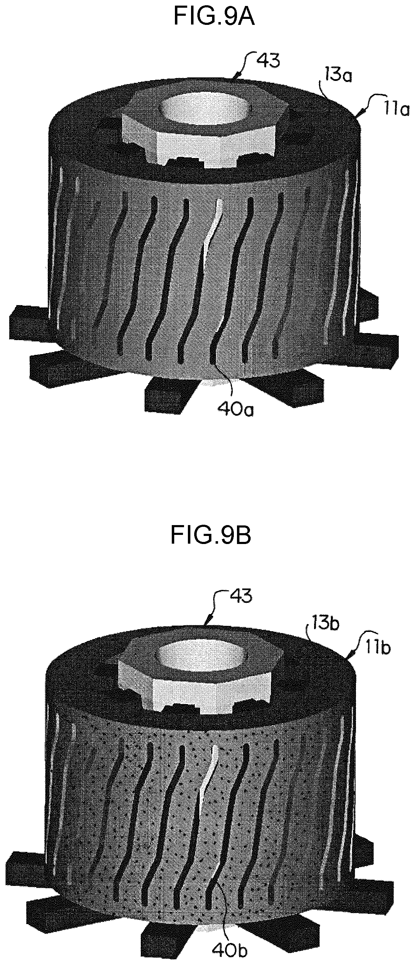

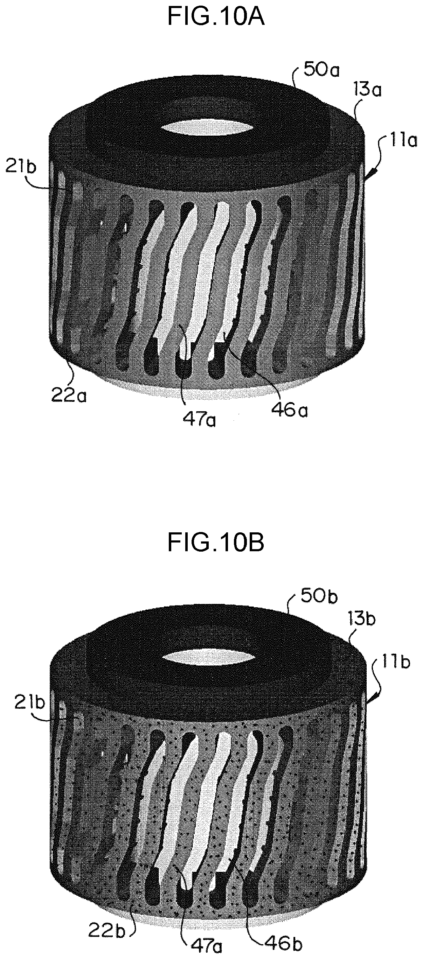

Next, as illustrated in Fig. 9A and Fig. 9B, after inserting an enlargement means 43 into both of the inward flanges 13a, 13b, an external force (enlarging force) toward the radial direction outside is applied to the inward flanges 13a, 13b by the enlargement means 43 so as to correct (enlarge) the inward flanges 13a, 13b to their proper dimensions. When this is performed, since the rigidity of the axial direction central portions of the mold material blocks 11a, 11b is lowered by the rough slits 40a, 40b, the axial direction central portions of the mold material blocks 11a, 11b move toward the radial direction outside in parallel as a unit with the inward flanges 13a, 13b while the circular cylindrical shape is maintained, such that the entireties of the mold material blocks 11a, 11b including the axial direction central portions thereof are corrected to their proper shapes (proper dimensions). Next, as illustrated in Fig. 10A and Fig. 10B, both of the inward flanges 13a, 13b are gripped by grippers 50a, 50b and machining is performed on the shape-corrected mold material blocks 11a, 11b similarly to as described above using end mills 16a, 16b to form penetrating slits 46a, 46b while retaining the overall mold material blocks 11a, 11b in their proper shapes.

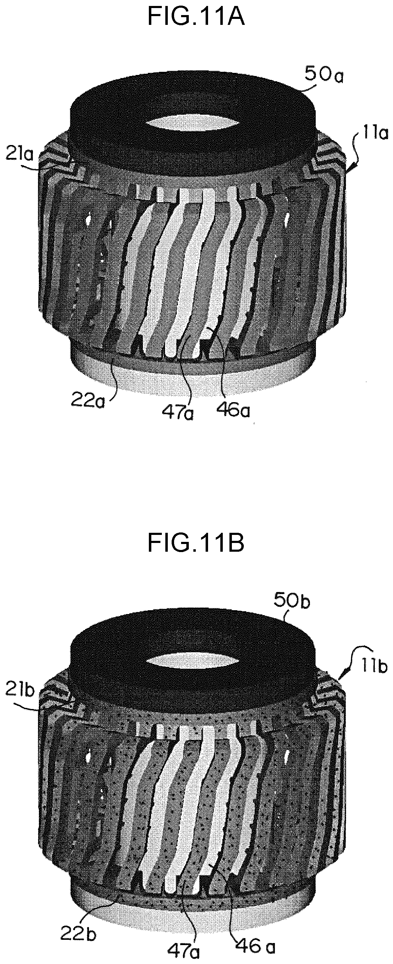

Even if dimensional error arises such that the mold material blocks 11a, 11b deviate from their proper shapes, since external force is used to correct the overall mold material blocks 11a, 11b, including mold pieces 47a, 47b, into their proper shapes after forming the rough slits 40a, 40b in the mold material blocks 11a, 11b and facilitating deformation, the penetrating slits 46a, 46b can be formed with high precision. Note that error in the roundness of the mold material blocks 11a, 11b can be corrected in a similar manner. The addition of such tasks enables pattern misalignment to be improved by approximately 33%, and enables roundness to be improved by approximately 40% in comparison to a vulcanization mold manufactured according to the method of the first exemplary embodiment. Moreover, configuration may be made in which the deep grooves 24 described above are formed with a narrower width, similarly to the rough slits 40a, 40b, after which an external correction force is then applied, and then the bottom walls 25 are removed to form the penetrating slits. Next, the remainder rings 21a, 22a, 21b, 22b are machined to a predetermined shape as illustrated in Fig. 11A and Fig. 11B. When this is performed, outer faces of the mold pieces 47a, 47b are tidied up by machining as required. The mold pieces 47a, 47b are then cut away from the remainder rings 21a, 22a, 21b, 22b while gripping the mold pieces 47a, 47b with a gripping means similarly to as described above. Subsequent tasks are similar to those of the first exemplary embodiment.

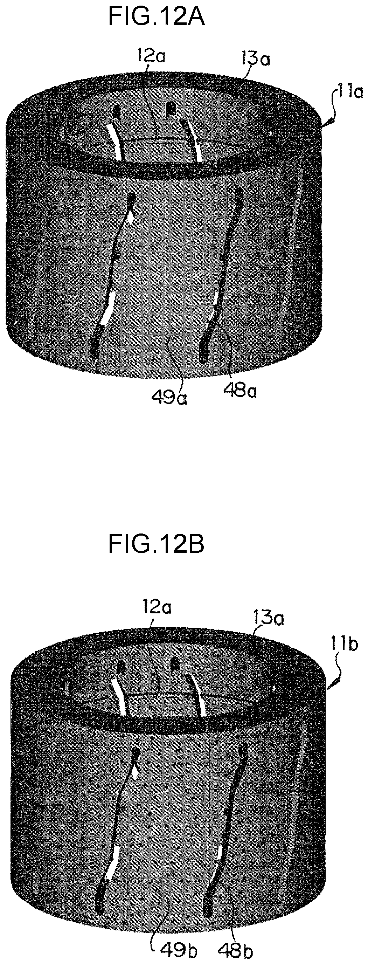

Fig. 12A and Fig. 12B illustrate a third exemplary embodiment of the present disclosure. In this exemplary embodiment, the axial direction central portions of the circular cylindrical shaped mold material blocks 11a, 11b are formed with the same number of penetrating slits 48a, 48b as the number of the holders 33, at equal angles around the circumferential direction. Subsequent tasks are similar to those of the first exemplary embodiment. However, since there are the same number of wide, circular arc shaped mold pieces 49a, 49b positioned between the penetrating slits 48a, 48b as the number of the holders 33, the mold pieces 49a, 49b obtained from the mold material blocks 11a, 11b are retrieved one at a time in sequence and installed at the inner faces of the respective holders 33. Although gas discharge passages are only present between the mold pieces 49a, 49b, thus lowering gas discharge efficiency, this configuration enables even complex shapes of the circumferential direction side faces of the mold pieces 49a, 49b and the side faces of the holders 33 to be accommodated with ease.

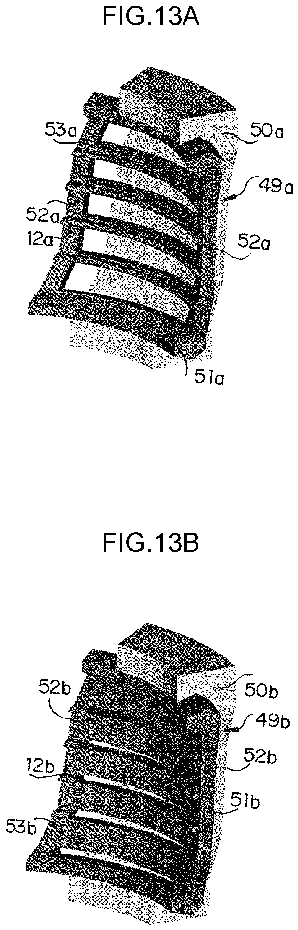

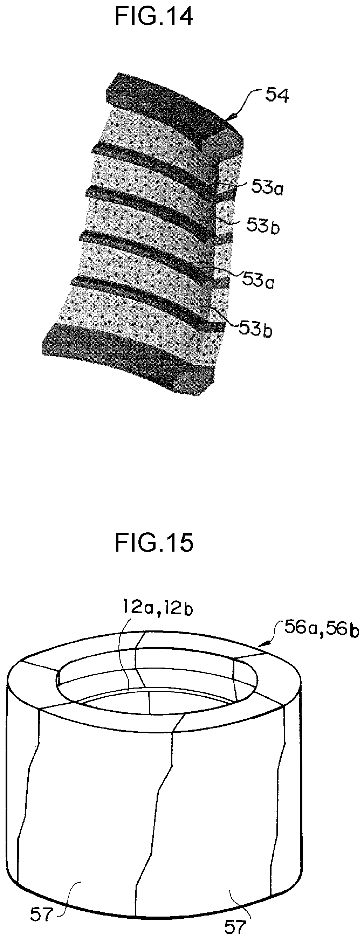

Note that the mold pieces 49a, 49b cut out from the mold material blocks 11a, 11b as described above may be processed as illustrated in Fig. 13A to Fig. 14 in order to improve the gas discharge efficiency. Fig. 13A and Fig. 13B illustrate grippers 50a, 50b that grip the respective mold pieces 49a, 49b from both axial direction sides. Plural sub slits 51a, 51b that are separated from each other in the axial direction are formed in the mold pieces 49a, 49b gripped by the grippers 50a, 50b using a machining tool such as an end mill, not illustrated in the drawings, and finishing is carried out on the inner faces of the mold pieces 49a, 49b. Note that the sub slits 51a, 51b extend in the circumferential direction. Both ends of each of the sub slits 51a, 51b end at the respective circumferential direction end portions of the mold pieces 49a, 49b so as to leave coupling portions 52a, 52b extending continuously along the axial direction at both circumferential direction end portions of the respective mold pieces 49a, 49b to provide reinforcement. This enables the sub slits 51a, 51b and resultant sub pieces 53a, 53b between the sub slits 51a, 51b to be performed with high precision. Note that the widths and the like of the sub slits 51a, 51b differ from each other in order to avoid interference with the molding protrusions 12a, 12b. However, the sub slits 51a and the sub pieces 53b, and the sub slits 51b and the sub pieces 53a, respectively have the same widths as each other. Next, the coupling portions 52a, 52b are removed from the mold pieces 49a, 49b to cut out the sub pieces 53a, 53b, after which the sub pieces 53a, 53b obtained from the mold pieces 49a, 49b are retrieved one at a time in sequence and combined to form a mold piece 54 as illustrated in Fig. 14. Note that the mold piece 54 may be applied to a normal vulcanization mold as well as to the mold pieces 49a, 49b illustrated in Figs. 12.

Fig. 15 illustrates a fourth exemplary embodiment of the present disclosure. In this exemplary embodiment, mold material blocks 56a, 56b are configured from mold material block segments 57 divided plural times around the circumferential direction, instead of from an integrated circular cylindrical shaped unit as in the first exemplary embodiment. In this exemplary embodiment, the mold material block segments 57 are formed by casting, or by cutting up a circular cylindrical shaped mold material block using a wire-cut electrical discharge machine, and then being arranged in the circumferential direction such that the mold material block sections 57 contact each other at both circumferential direction end faces so as to form the circular cylindrical shapes of the mold material blocks 56a, 56b overall. Subsequent tasks are similar to those of the first exemplary embodiment. This exemplary embodiment enables penetrating slits to be formed consistently even in cases in which the penetrating slits (mold pieces) include locations inclined with respect to the axial direction.

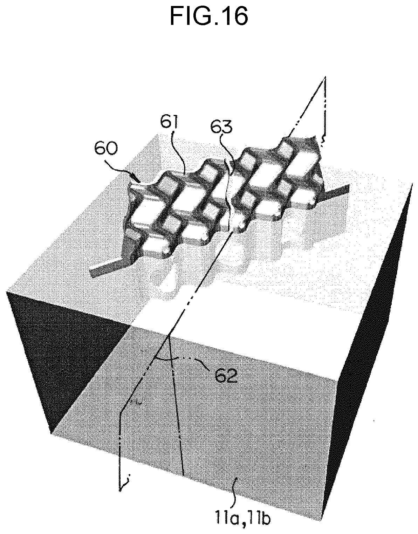

Fig. 16 illustrates a fifth exemplary embodiment of the present disclosure. Fig. 16 illustrates plural sipe plates 60 serving as fine groove formation bodies configured from thin metal sheets, with base end portions of the sipe plates 60 cast into inner faces of the axial direction central portions of the mold material blocks 11a, 11b so as to be embedded therein. Projection portions 61 projecting from the inner faces of the sipe plates 60 are pressed into the tread of a tire during vulcanization to form sipes configured by fine grooves in the tread. Note that the sipe plates 60 may be disposed intersecting a machining target face 62 to be machined by a machining tool such as an end mill (to become penetrating slits side faces after machining). In such cases, when the penetrating slits are formed in the mold material blocks 11a, 11b without giving any thought to the sipe plates 60, the sipe plates 60 (projection portions 61) are simply removed at locations positioned on the movement path of the machining tool. However, locations of the sipe plates 60 that remain after machining are applied with external force due to machining resistance from the machining tool. These remaining locations of the sipe plates 60 (projection portions 61) accordingly deform. This results in approximately 1 mm of misalignment in the sipes following vulcanization. In order to address this, in the present exemplary embodiment, slits 63 serving as fine grooves extending parallel to the machining target face 62 are formed to the sipe plates 60 (projection portions 61), for example by a laser machine or an electrical discharge machine, at a position where the sipe plates 60 and the machining target face 62 (penetrating slit side face) intersect each other. As a result, when forming the penetrating slits using a machining tool, the blade tip of the machining tool passes through the slits 63, such that hardly any external force is applied to the side of the sipe plates 60 (projection portions 61) remaining on the mold piece by the machining tool. This enables deformation of the remaining side of the sipe plates 60 (projection portions 61) due to machining resistance to be easily avoided, thus enabling misalignment between the remaining sipes such as described above to be reduced to approximately 0.15 mm. Note that in the present disclosure, a fine groove formation body may also be used to form fine grooves to suppress uneven wear.

### Industrial Applicability

The present disclosure may be applied in the industrial field of forming plural mold segments by installing plural mold pieces to inner faces of plural holders.

The disclosure of Japanese Patent Application No. 2017-159595, filed on August 22, 2017, is referred to herein.

## Claims

1. A tire vulcanization mold manufacturing method comprising:
a process of preparing a plurality of mold material blocks (11a, 11b, 56a, 56b), an inner face of an axial direction central portion of each of the mold material blocks being formed with a molding protrusion (12a, 12b) in a complementary relationship with a wide groove of a tire, and each of the mold material blocks having a same circular cylindrical shape;
a process of forming, by machining, a plurality of penetrating slits (17a, 17b) through the axial direction central portion of each of the mold material blocks, such that the penetrating slits each extend along the axial direction and are separated from each other in a circumferential direction, and forming mold pieces (20a, 20b) between adjacent penetrating slits with a portion of the molding protrusion formed on an inner face of the mold pieces;
a process of cutting out the mold pieces from remainder rings (21a, 21b) that extend continuously in the circumferential direction at one axial direction end and the other axial direction end of the mold pieces; and
a process of repeatedly performing a task to extract the mold pieces from the plurality of mold material blocks one at a time in sequence and to install the mold pieces at inner faces of a plurality of holders (33) so as to form a plurality of mold segments (34) each configured by a holder and a mold piece.

2. The tire vulcanization mold manufacturing method of claim 1, wherein:
a task of forming the penetrating slits by the machining is performed by forming deep grooves (24) of a same shape as the penetrating slits in each of the mold material blocks before sequentially removing bottom walls (25) of the deep grooves.

3. The tire vulcanization mold manufacturing method of either claim 1 or claim 2, wherein:
a task of forming the penetrating slits by the machining is performed such that rough slits (40a, 40b) with a narrower width than a proper dimension of the penetrating slits are formed leaving a finishing allowance at positions of the penetrating slits before applying a predetermined external force to the remainder rings of the mold material blocks to correct to a proper shape and then machining the corrected mold material blocks to form the penetrating slits.

4. The tire vulcanization mold manufacturing method of any one of claim 1 to claim 3, wherein the mold material blocks are configured from a plurality of mold material block segments (57) divided in the circumferential direction.

5. The tire vulcanization mold manufacturing method of any one of claim 2 to claim 4, wherein:
when a base end portion of a fine groove formation body is embedded in the inner face of the axial direction central portion of each of the mold material blocks and the fine groove formation body is disposed so as to intersect a penetrating slit side face, a fine groove extending parallel to the penetrating slit side face is formed at the fine groove formation body at a position where the fine groove formation body and the penetrating slit side face intersect.

## Patentansprüche

1. Verfahren zur Fertigung einer Reifenvulkanisationsform, das Folgendes umfasst:
einen Prozess des Vorbereitens einer Vielzahl von Formmaterialblöcken (11a, 11b, 56a, 56b), wobei eine innere Fläche eines in Axialrichtung mittigen Abschnitts jedes der Formmaterialblöcke mit einem Formungsvorsprung (12a, 12b) in einer komplementären Beziehung mit einer breiten Rille eines Reifens geformt ist, und jeder der Formmaterialblöcke eine gleiche kreiszylindrische Form aufweist;
einen Prozess des Formens, durch Spanen, einer Vielzahl von hindurchdringenden Schlitzen (17a, 17b) durch den in Axialrichtung mittigen Abschnitt jedes der Formmaterialblöcke, sodass sich die hindurchdringenden Schlitze jeweils entlang der Axialrichtung erstrecken und in einer Umfangsrichtung voneinander getrennt sind, und des Formens von Formstücken (20a, 20b) zwischen benachbarten hindurchdringenden Schlitzen mit einem Abschnitt des Formungsvorsprungs, der auf einer inneren Fläche der Formstücke geformt ist,
einen Prozess des Ausschneidens der Formstücke aus Restringen (21a, 21b), die sich durchgehend in der Umfangsrichtung an dem einen Axialrichtungsende und dem anderen Axialrichtungsende der Formstücke erstrecken; und
einen Prozess des wiederholten Durchführens einer Tätigkeit, um die Formstücke eins nach dem anderen der Reihe nach aus der Vielzahl von Formmaterialblöcken zu entnehmen und die Formstücke an inneren Flächen einer Vielzahl von Halterungen (33) zu installieren, um so eine Vielzahl von Formsegmenten (34) zu bilden, die jeweils von einer Halterung und einem Formstück gebildet werden.

2. Verfahren zur Fertigung einer Reifenvulkanisationsform nach Anspruch 1, wobei:
eine Tätigkeit des Formens der hindurchdringenden Schlitze durch das Spanen durch Formen von tiefen Rillen (24) einer gleichen Form wie die hindurchdringenden Schlitze in jedem der Formmaterialblöcke vor einem aufeinanderfolgenden Entfernen von Sohlenwänden (25) der tiefen Rillen durchgeführt wird.

3. Verfahren zur Fertigung einer Reifenvulkanisationsform nach Anspruch 1 oder Anspruch 2, wobei:
eine Tätigkeit des Formens der hindurchdringenden Schlitze durch das Spanen derart durchgeführt wird, dass grobe Schlitze (40a, 40b) mit einer schmaleren Breite als eine richtige Abmessung der hindurchdringenden Schlitze geformt werden, was ein Schlichtaufmaß an Positionen der hindurchdringenden Schlitze belässt, vor einem Anwenden einer vorbestimmten äußeren Kraft auf die Restringe der Formmaterialblöcke, um auf eine richtige Form zu korrigieren, und danach Spanen der korrigierten Formmaterialblöcke, um die hindurchdringenden Schlitze zu formen.

4. Verfahren zur Fertigung einer Reifenvulkanisationsform nach einem der Ansprüche 1 bis 3, wobei die Formmaterialblöcke aus einer Vielzahl von Formmaterialblocksegmenten (57) konfiguriert sind, die in der Umfangsrichtung geteilt sind.

5. Verfahren zur Fertigung einer Reifenvulkanisationsform nach einem der Ansprüche 2 bis 4, wobei:
wenn ein Basisendabschnitt eines Feinrillen-Formungskörpers in der inneren Fläche des in Axialrichtung mittigen Abschnitts jedes der Formmaterialblöcke eingebettet ist und der Feinrillen-Formungskörper so angeordnet ist, dass er eine Seitenfläche eines hindurchdringenden Schlitzes schneidet, eine feine Rille, die sich parallel zu der Seitenfläche eines hindurchdringenden Schlitzes erstreckt, an dem Feinrillen-Formungskörper an einer Position geformt wird, wo sich der Feinrillen-Formungskörper und die Seitenfläche eines hindurchdringenden Schlitzes schneiden.

## Revendications

1. Procédé de fabrication d'un moule de vulcanisation de pneumatique, comprenant :
un processus de préparation d'une pluralité de blocs de matériau de moulage (11a, 11b, 56a, 56b), une face interne d'une partie centrale, dans la direction axiale, de chacun des blocs de matériau de moulage étant formée avec une saillie de moulage (12a, 12b) dans une relation complémentaire avec une rainure large d'un pneumatique, et chacun des blocs de matériau de moulage ayant la même forme cylindrique circulaire ;
un processus de formation, par usinage, d'une pluralité de fentes pénétrantes (17a, 17b) à travers la partie centrale, dans la direction axiale, de chacun des blocs de matériau de moulage, de sorte que les fentes pénétrantes s'étendent chacune le long de la direction axiale et sont séparées les unes des autres dans une direction circonférentielle, et de formation de pièces de moule (20a, 20b) entre des fentes pénétrantes adjacentes, avec une partie de la saillie de moulage formée sur une face interne des pièces de moule ;
un processus de découpe des pièces de moule à partir d'anneaux restants (21a, 21b) qui s'étendent en continu dans la direction circonférentielle, au niveau d'une extrémité, dans la direction axiale, et de l'autre extrémité, dans la direction axiale, des pièces de moule ; et
un processus de réalisation répétée d'une tâche, pour extraire les pièces de moule de la pluralité de blocs de matériau de moulage, une par une, en séquence, et pour installer les pièces de moule au niveau des faces internes d'une pluralité de supports (33), de sorte à former une pluralité de segments de moule (34), configurés chacun par un support et une pièce de moule.

2. Procédé de fabrication d'un moule de vulcanisation de pneumatique selon la revendication 1, dans lequel :
une tâche consistant à former les fentes pénétrantes par usinage est effectuée en formant des rainures profondes (24), de la même forme que les fentes pénétrantes, dans chacun des blocs de matériau de moulage avant le retrait séquentiel des parois de fond (25) des rainures profondes.

3. Procédé de fabrication d'un moule de vulcanisation de pneumatique selon les revendications 1 ou 2, dans lequel :
une tâche consistant à former les fentes pénétrantes par usinage est effectuée de sorte que des fentes grossières (40a, 40b), avec une largeur plus étroite qu'une dimension appropriée des fentes pénétrantes, sont formées en laissant une surépaisseur d'usinage au niveau de positions des fentes pénétrantes avant d'appliquer une force externe prédéterminée aux anneaux restants des blocs de matériau de moulage en vue d'une correction à une forme appropriée, et à usiner ensuite les blocs de matériau de moulage corrigés pour former les fentes pénétrantes.

4. Procédé de fabrication d'un moule de vulcanisation de pneumatique selon l'une quelconque des revendications 1 à 3, dans lequel les blocs de matériau de moulage sont configurés à partir d'une pluralité de segments de blocs de matériau de moulage (57) divisés dans la direction circonférentielle.

5. Procédé de fabrication d'un moule de vulcanisation de pneumatique selon l'une quelconque des revendications 2 à 4, dans lequel :
lorsqu'une partie d'extrémité de base d'un corps de formation d'une rainure fine est encastrée dans la face interne de la partie centrale, dans la direction axiale, de chacun des blocs de matériau de moulage, et que le corps de formation de la rainure fine est disposé de sorte à couper une face latérale d'une fente pénétrante, une rainure fine s'étendant parallèlement à la face latérale de la fente pénétrante est formée au niveau du corps de formation de la rainure fine, au niveau d'une position où le corps de formation de la rainure fine et la face latérale de la fente pénétrante se coupent.
